Europäisches Patentamt

European Patent Office

Office européen des brevets

(11) Publication number: **0 327 344**
**A2**

(12) # EUROPEAN PATENT APPLICATION

(21) Application number: 89300978.7

(51) Int. Cl.⁴: **H 04 N 3/15**

(22) Date of filing: 01.02.89

(30) Priority: 02.02.88 JP 22386/88

(43) Date of publication of application:
09.08.89 Bulletin 89/32

(84) Designated Contracting States:
CH DE FR GB IT LI

(71) Applicant: SEIKO INSTRUMENTS INC.
31-1, Kameido 6-chome Koto-ku
Tokyo 136 (JP)

(72) Inventor: Machida, Satoshi
c/o Seiko Instruments Inc. 31-1 Kameido 6-chome
Koto-ku Tokyo (JP)

Kawahara, Yukito
c/o Seiko Instruments Inc. 31-1 Kameido 6-chome
Koto-ku Tokyo (JP)

Mukainakano, Hiroshi
c/o Seiko Instruments Inc. 31-1 Kameido 6-chome
Koto-ku Tokyo (JP)

(74) Representative: Caro, William Egerton et al
J. MILLER & CO. Lincoln House 296-302 High Holborn
London WC1V 7JH (GB)

The title of the invention has been amended (Guidelines for Examination in the EPO, A-III, 7.3).

(54) **Solid state image sensor.**

(57) An image sensor comprises an array of photo-transistors (1) each of which has a collector region, an emitter region and a base region. A first switch (4) is connected to the base region of each photo-transistor. A second switch (2) is connected to the base region of each photo-transistor (1) and is operative after the respective photo-transistor (1) has discharged electric charge accumulated therein during exposure thereof to incident light, thereby to set a potential level of the base region thereof to a given substantially constant value thereby to re-set the corresponding photo-transistor.

FIG. 1

**Description**

## AN IMAGE SENSOR

This invention relates to image sensors, for example, used in facsimile machines, image scanners and area image sensors, composed of rows and columns of photo-transistors, utilised in VTR devices, etc.

A photo-diode or a photo-transistor has normally been utilised as a photo-electric conversion element in a conventional image sensor. A photo-transistor has a relatively great sensitivity as compared to a photo-diode, but has the drawbacks that there is a relatively large fluctuation of output level and so a marked after image, and a low linearity of output level with respect to incident light level on the photo-transistor.

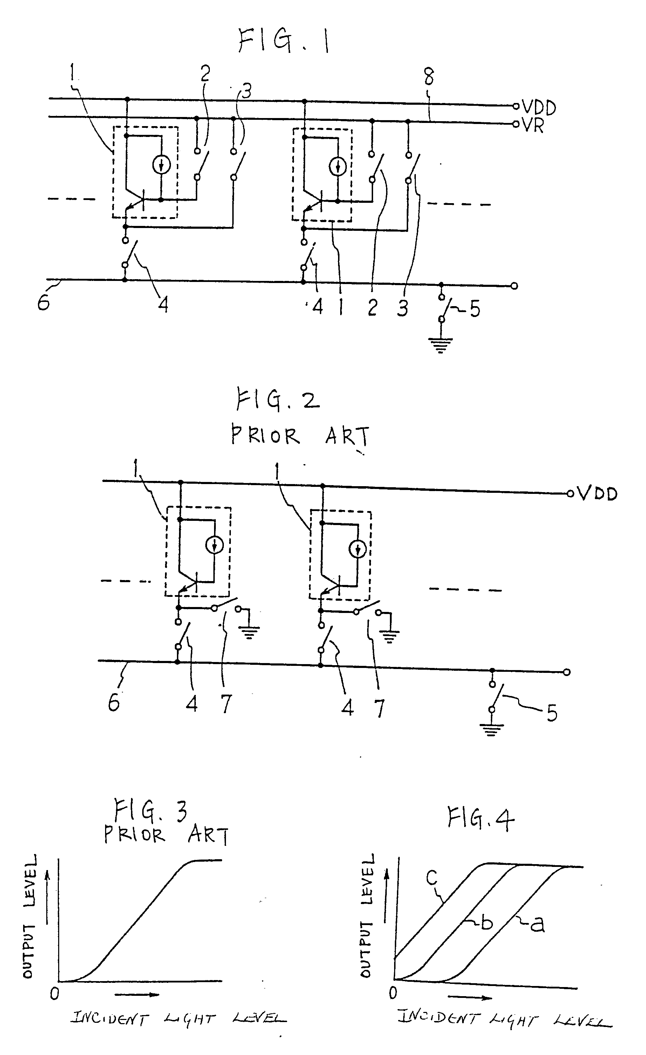

Figure 2 is a circuit diagram showing one example of a conventional image sensor utilising a plurality of photo-transistors 1 for accumulating and discharging electric charge. Each of the photo-transistors 1, which is of the npn type and which corresponds to each of a plurality of image elements, has a collector electrode held at a given potential level VDD (VDD > 0). An emitter electrode of each photo-transistor 1 is connected to a respective selecting switch 4 which, in turn, is connected to a signal line 6 so as to select the corresponding photo-transistor. The emitter electrode is also connected to a respective re-setting switch 7 effective to re-set it. The signal line 6 is connected to a common re-setting switch 5 effective to re-set the signal line 6.

The operation of the conventional image sensor of Figure 1 will now be explained. A selecting switch 4, corresponding to a preceding photo-transistor, is turned off to terminate the outputting operation thereof. Then, the common re-setting switch 5 is turned on to re-set the signal line 6 to ground potential level GND. Thereafter, the common re-setting switch 5 is turned off, and another selecting switch 4 corresponding to a succeeding photo-transistor is turned on to initiate the outputting operation of the succeeding photo-transistor. At the same time the re-setting switch 7 corresponding to the preceding photo-transistor is turned on to re-set the potential level of the emitter electrode to the preceding photo-transistor 1 to GND. After the re-setting switch 7 is turned off, the preceding photo-transistor starts to accumulate photo-electric charge. The accumulation of photo-electric charge is effected by reducing the width of the depletion region at the collector electrode of the photo-transistor 1, and therefore the potential level of the emitter electrode is boosted according to the accumulated photo-electric charge. Then, the corresponding selecting switch 4 is turned on to cause the instant transition of electric charge within the photo-transistor 1 thereby to broaden the width of the collector junction and thereby to foward-bias the emitter junction. Consequently, the photo-transistor 1 carries out its transistor operation to output into the signal line 6 electric charge which is the product of the excess carriers in the base region and the forward current gain of the photo-transistor.

The above described conventional image sensor has the following drawbacks. Since the output duration (on-time duration of the selecting switch 4) assigned to the photo-transistor 1 is relatively short, the excess carriers in the base region cannot be completely discharged or eliminated, and the potential level of the base region after the selecting switch 4 is turned off remains at a level proportional to the amount of out putted electric charge. Moreover, during the following re-setting operation of the emitter electrode (during the time period for which the re-setting switch 7 is held on), the potential level of the emitter electrode can be instantly returned to GND, but the potential level of the base region cannot be decreased immediately because the base region is floated from VDD to GND. As a result, when the next accumulation of photo-electric charge is started in the photo-transistor (at the moment the re-setting switch is turned off), the potential level of the base region remains at some level if the outputted electric charge has been considerable in the previous outputting operation. The fact that the potential level of the base region has remained at some value means that the photo-transistor still has capacity to output the electric charge. Thus, even if the individual photo-transistor does not receive incident light during the next accumulation time period, the individual photo-transistor may output the electric charge at the next outputting or reading operation, which causes an after image. On the other hand, if the photo-transistor does not receive incident light during several successive operating periods, the potential level of the base region continues to decrease in response to repeated operation of the re-setting switch 7. Consequently, the individual photo-transistor cannot produce the correct output electric charge corresponding to the incident light level even after several successive operating periods. This drawback can be explained by the fact that part of the photo-electric charge is consumed during the transition of electric charge between the emitter junction and the collector junction when the emitter junction is forward-biased during the outputting operation. Accordingly, as shown in Figure 3, there is the drawback that the linearity of output level is bad when the incident light level is relatively small.

As described above, the conventional image sensor utilising photo-transistors has the drawbacks that the output level of individual photo-transistors is affected by the previous output level of the same photo-transistor, and low linearity of the output level for relatively low incident light levels.

The present invention seeks to provide an image sensor having no substantial after image and a good linearity of output level relative to the incident light level.

According to the present invention, there is provided an image sensor comprising an array of photo-transistors each of which has a collector region, an emitter region and a base region, and a first switch means connected to the base region of each photo-transistor, characterised by a second switch means connected to the base region of each photo-transistor, each of the switch means being operative after the respective photo-transistor has discharged electric charge accumulated therein during exposure thereof to incident light to set a potential level of the base region thereof to a given substantially constant value thereby to re-set the corresponding photo-transistor.

Preferably, the voltage line held at a given first potential level and connected to the collector regions of the photo-transistors, and a common signal line re-settable to a given second potential level and connected to the emitter regions of the photo-transistors.

The image sensor may include third switch means connected to the corresponding emitter region of each photo-transistor for re-setting a potential level of the emitter region to a given value closer to the first potential level than to the second potential level.

Each of the second switch means may be operative to re-set the potential level of the base region of the respective photo-transistors to a given constant value closer to the first potential level than to the second potential level.

Preferably an image sensor includes a base electrode disposed over a surface of a part of the base region of each photo-transistor, the base electrode being connected to the respective second switch means. Thus, each of the second switch means may be composed of a MOS switching transistor having drain, source, channel and gate regions, the base electrode being connected to the drain region.

Alternatively, the second switch means may be composed of a MOS switching transistor having drain, source, channel and gate regions, the drain region being used also as the base region of the respective photo-transistor.

In the above constructed image sensor, after each photo-transistor carries out an outputting operation, the potential level of the base region is directly re-set by means of the second switch means so as to enable the individual photo-transistor always to start accumulation of photo-electric charge from a constant and re-set initial state. Accordingly, the incident output level is not affected by the previous output level, and after image is effectively reduced or eliminated.

The invention is illustrated, merely by way of example, in the accompanying drawings, in which:-

Figure 1 is a circuit diagram of one embodiment of an image sensor according to the present invention;

Figure 2 is a circuit diagram of a conventional image sensor;

Figure 3 shows the relation between output level of the conventional image sensor of Figure 2 and the incident light level; and

Figure 4 shows the relation between the output level of the image sensor of Figure 1 and the incident light level.

Figure 1 is a circuit diagram of one embodiment of an image sensor according to the present invention having a plurality of photo-transistors 1 as image elements for accumulating and discharging photo-electric charge. A collector region of an individual photo-transistor 1 cf the npn type is held at a constant potential level VDD (VDD > 0). The emitter region of the photo-transistor 1 is connected to a selecting switch 4 which is coupled to a signal line 6, and also connected to one terminal of an emitter re-setting switch 3. A base region of the photo-transistor 1 is connected to one terminal of a base re-setting switch 2. The base re-setting switch 2 is, for example, a MOS switching transistor which comprises drain, source, channel and gate regions. The drain region of the switching transistor is connected to the base region of the photo-transistor through a base electrode disposed over a surface of a part of a base region. At this time, a re-setting voltage is applied to the source region of the photo-transistor. Alternatively, the base region of the photo-transistor may be used as the drain region of the MOS switching transistor. The other terminals of the emitter and base re-setting switches 3, 2 are connected, respectively, to a re-set line 8. The re-set line 8 is held at a constant potential level VR which can ge generated within the image sensor, or can be provided from an external source. A common re-setting switch 5 is provided to re-set the potential level of the signal line 6.

After one of the individual photo-transistors 1 finishes the outputting operation to the signal line 6 by turning off the corresponding selecting switch 4, the common re-set switch 5 is turned on to re-set the signal line 6 to GND. Thereafter, the common re-set switch 5 is returned to the off state, and a succeeding individual photo-transistor 1 is selected by turning on the corresponding selecting switch 4 and outputs a photo-electric charge representative of incident light level from the corresponding image element, into the signal line 6 thus reading and sensing the corresponding image element. At the same time, the base and emitter re-setting switches 2, 3 corresponding to the preceding photo-transistor 1 are turned on to re-set the base potential level and the emitter potential level of the preceding photo-transistor 1 to the re-set potential level VR. The excess carriers within the base region are directly discharged through the base electrode by means of the base re-setting switch 2 so that the base potential level can be set to the level VR within a sufficiently short time interval. At the moment when the emitter re-setting switch 3 is turned off, the emitter and base potential levels are held at the level VR regardless of the previous output level of the individual photo-transistor, which can start the next electric charge accumulating operation in the thus re-set initial state. Accordingly, the next output level of the photo-transistor is not affected by its previous output level thereby reducing or eliminating the after image. Further, as shown in Figure 4, by changing the re-set potential level VR, the dependency of output level to the individual light level can be regulated. If the re-set level VR is equal to that of the signal line 6 (GND), each individual photo-transistor outputs its accumulated electric charge only when the incident light level to the photo-transistor exceeds a considerable predetermined level as indicated by the output curve a of Figure 4. This is due to the fact that when the accumulation of electric charge is initiated in the individual photo-transistor in response to the reception of incident light from the corresponding image element, the voltage between the base and emitter regions is zero, and that when the emitter junction is forward-biased during the outputting operation, a part of the accumulated electric charge is consumed during the movement of electric charge between the emitter junction and the collector junction.

As the value of the re-set potential level VR approaches from the re-set potential level GND of the signal line 6 to the collector potential level VDD, the output curve is selected in the order of $\bar{a}$, $\bar{b}$ and $\bar{c}$ as shown in Figure 4. By re-setting the value of the re-setting potential level VR closer to the collector potential VDD than to the re-setting potential level GND of the signal line 6, the individual photo-transistor is placed equivalently in the state where the photo-transistor accumulates a given amount of photo-electric charge. In the case of the state shown by the output curve $\bar{b}$, the photo-transistor can output electric charge just above the zero incident light level. In the case of the state shown by the output curve $\bar{c}$, the photo-transistor is off-set below a given incident light level, but has a good linearity between the output level and the incident light level. As explained above, by re-setting the potential level of the base and emitter regions closer to the collector potential level than to the re-setting potential level of signal line 6, the linearity of the output level relative to the incident light level can be improved.

The re-setting potential level of the signal line 6 can be set to other than GND. Further, the re-setting potential level of the base region can be different from that of the emitter region. In this case, the re-setting potential level of the base region or the emitter region can be set closer to the collector potential level VDD than to the re-setting potential level of the signal line 6 in order to improve the linearity of the output level relative to the incident light level.

Further, the on and off operation of each switch can be timed, for example, by a shift register (not shown) controlled by a clock signal. In addition, the re-setting switch 3 connected to the emitter region can be omitted, and in such a case, the re-setting of the emitter region can be carried out at the same time as the re-setting of the signal line 6. Further, when the accumulated electric charge is discharged and the corresponding bit image information is read through a register (not shown), the re-setting switch 5 connected to the signal line 6 can be eliminated.

The image sensor according to the present invention and described above is comprised of an array of photo-transistors, each photo-transistor being formed with its base region connected to a switch and, after the outputting operation thereof, the base potential level of the base region is re-set to a given value by means of the switch, thereby effectively reducing or eliminating after image.

Further, the re-setting potential level of the emitter region and/or base region is set closer to the collector potential level than to the re-setting potential level of the signal line, thereby improving the linearity of the photo-transistor output level relative to the incident light level thereof.

**Claims**

1. An image sensor comprising an array of photo-transistors (1) each of which has a collector region, an emitter region and a base region, and a first switch means (4) connected to the base region of each photo-transistor, characterised by a second switch means (2) connected to the base region of each photo-transistor (1), each of the switch means being operative after the respective photo-transistor (1) has discharged electric charge accumulated therein during exposure thereof to incident light to set a potential level of the base region thereof to a given substantially constant value thereby to re-set the corresponding photo-transistor.

2. An image sensor as claimed in claim 1 characterised by a common voltage line held at a given first potential level (VDD) and connected to the collector regions of the photo-transistors (1), and a common signal line (6) re-settable to a given second potential level (GND) and connected to the emitter regions of the photo-transistors.

3. An image sensor as claimed in claim 2, characterised by including third switch means (3) connected to the corresponding emitter region of each photo-transistor for re-setting a potential level of the emitter region to a given value (VR) closer to the first potential level (VDD) than to the second potential level (GND).

4. An image sensor as claimed in claim 2 or 3, characterised in that each of the second switch means (2) is operative to re-set the potential level (VR) of the base region of the respective photo-transistors (1) to a given constant value closer to the first potential level (VDD) than to the second potential level (GND).

5. An image sensor as claimed in any preceding claim characterised by including a base electrode disposed over a surface of a part of the base region of each photo-transistor, the base electrode being connected to the respective second switch means (2).

6. An image sensor as claimed in claim 5, characterised in that each of the second switch means (2) is composed of a MOS switching transistor having drain, source, channel and gate regions, the base electrode being connected to the drain region.

7. An image sensor as claimed in any of claims 1 to 5, characterised in that each of the second switch means (2) is composed of a MOS switching transistor having drain, source, channel and gate regions, the drain region being used also as the base region of the respective photo-transistor (1).

8. An image sensor comprising an array of photo-transistors, each of the photo-transistors having a collector region, an emitter region, and a base region; and a plurality of switch means connected to the respective base regions, each of the switch means operative after the corresponding photo-transistor discharges photo-electric charge accumulated therein during exposure thereof to the incident light to set a potential level of the base region thereof to a given constant value to thereby re-set the corresponding photo-transistor.

FIG. 1

FIG. 2
PRIOR ART

FIG. 3
PRIOR ART

OUTPUT LEVEL

0

INCIDENT LIGHT LEVEL

FIG. 4

OUTPUT LEVEL

c

b   a

0

INCIDENT LIGHT LEVEL